# EUROPEAN PATENT APPLICATION

(11) **EP 4 836 318 A1**
(43) Date of publication of application: **04.11.2026**
(21) Application number: 23963074.2
(22) Date of filing: 26.12.2023
(51) Int. Cl.: H04B 10/075

(54) **ESTIMATION DEVICE AND ESTIMATION METHOD**

(71) Applicant: NTT, Inc., Tokyo 100-8116 (JP)
(72) Inventor: MANO Toru, Musashino-shi, Tokyo 180-8585 (JP); ANAZAWA Kazuya, Musashino-shi, Tokyo 180-8585 (JP)
(74) Representative: Hoffmann Eitle
(86) International application number: PCT/JP2023/046747
(87) International publication number: WO 2025/141720

(57) **Abstract**

An estimation device 14 includes: a measurement unit 141 that measures a value of signal quality or transmission quality for each received optical power at an optical receiver, for an optical transmitter and the optical receiver that are connected via a transmission line; a first calculation unit 142 that calculates a penalty that relates to the signal quality or the transmission quality and is dependent on received optical power, by using a measured value of the signal quality or the transmission quality for each of the received optical powers at the optical receiver; and a second calculation unit 143 that calculates an amount of change in a relationship between the signal quality and the transmission quality of the optical transmitter and the optical receiver according to a change in the received optical power, by using the penalty that relates to the signal quality or the transmission quality and is dependent on the received optical power.

## Description

### Technical Field

The present disclosure relates to an estimation device and an estimation method.

### Background Art

Estimation of signal quality (for example, a Q-factor or Pre-FEC BER) and measurement of transmission quality (for example, GSNR) are essential techniques for optical network design, operation, and monitoring. In order to estimate the signal quality and measure the transmission quality with high accuracy, it is necessary to grasp the BER-OSNR characteristic of an optical transceiver in a back-to-back configuration in which an optical transmitter and an optical receiver are directly connected by an optical fiber having a very short propagation distance, or the like.

For example, in the back-to-back configuration, signal light from the optical transmitter and optical noise from an optical noise generation device are multiplexed by a multiplexer, and an optical noise amount (OSNR) and signal quality (for example, Pre-FEC BER) at a time when multiplexed light has been input to the optical receiver are measured. When a measured value is plotted on a graph in which a horizontal axis indicates the optical noise amount (transmission quality) and a vertical axis indicates the signal quality, a BER-OSNR characteristic in which the signal quality decreases as the optical noise amount increases is obtained.

By using this BER-OSNR characteristic, the signal quality of a received signal can be estimated from transmission quality that has been measured or estimated in advance or transmission quality that has been calculated by using a tool such as GNPy (see Non Patent Literature 1). It is sufficient if a value of signal quality that corresponds to a value of the calculated transmission quality is read. Conversely, transmission quality can be estimated from signal quality that has been measured in an optical transceiver (see Non Patent Literature 2). It is sufficient if a value of transmission quality (an optical noise amount) that corresponds to a value of the measured signal quality is read.

### Citation List

### Non Patent Literature

Non Patent Literature 1: Vittorio Curri, "GNPy model of the physical layer for open and disaggregated optical networking [Invited]", JOURNAL OF Optical Communications and Networking, Vol.14, No.6, June 2022, C92-C104
Non Patent Literature 2: Kaida Kaeval, and 8 others, "QoT assessment of the optical spectrum as a service in disaggregated network scenarios", JOURNAL OF Optical Communications and Networking, Vol.13, No.10, October 2021, E1-E12

### Summary of Invention

### Technical Problem

The BER-OSNR characteristic is measured in a state where received optical power that is input to the optical receiver is fixed to a constant value. However, the BER-OSNR characteristic changes according to the received optical power, and received optical power at the time of measuring the BER-OSNR characteristic does not always coincide with current received optical power or received optical power to be set. Therefore, there has been a need for a method for quantitatively evaluating an influence of a change in received optical power.

The present disclosure has been made in view of the circumstances described above, and an object of the present disclosure is to provide a technique that is capable of quantitatively evaluating an influence of a change in received optical power on a relationship between signal quality and transmission quality of an optical transceiver.

### Solution to Problem

An estimation device in one aspect of the present disclosure includes: a measurement unit that measures a value of signal quality or transmission quality for each received optical power at an optical receiver, for an optical transmitter and the optical receiver that are connected via a transmission line; a first calculation unit that calculates a penalty that relates to the signal quality or the transmission quality and is dependent on received optical power, by using a measured value of the signal quality or the transmission quality for each of the received optical powers at the optical receiver; and a second calculation unit that calculates an amount of change in a relationship between the signal quality and the transmission quality of the optical transmitter and the optical receiver according to a change in the received optical power, by using the penalty that relates to the signal quality or the transmission quality and is dependent on the received optical power.

An estimation method in one aspect of the present disclosure is an estimation method performed by an estimation device, the estimation method including: measuring a value of signal quality or transmission quality for each received optical power at an optical receiver, for an optical transmitter and the optical receiver that are connected via a transmission line; calculating a penalty that relates to the signal quality or the transmission quality and is dependent on received optical power, by using a measured value of the signal quality or the transmission quality for each of the received optical powers at the optical receiver; and calculating an amount of change in a relationship between the signal quality and the transmission quality of the optical transmitter and the optical receiver according to a change in the received optical power, by using the penalty that relates to the signal quality or the transmission quality and is dependent on the received optical power.

### Advantageous Effects of Invention

According to the present disclosure, it is possible to provide a technique that is capable of quantitatively evaluating an influence of a change in received optical power on a relationship between signal quality and transmission quality of an optical transceiver.

### Brief Description of Drawings

[Fig. 1] Fig. 1 is a diagram illustrating a configuration example of an estimation system according to the present embodiment.
[Fig. 2] Fig. 2 is a diagram illustrating another configuration example of an optical system.
[Fig. 3] Fig. 3 is a diagram illustrating another configuration example of the optical system.
[Fig. 4] Fig. 4 is a diagram illustrating another configuration example of the optical system.
[Fig. 5] Fig. 5 is a diagram illustrating another configuration example of the optical system.
[Fig. 6] Fig. 6 is a diagram illustrating a result of measuring a value of signal quality for each received optical power.
[Fig. 7] Fig. 7 is a diagram illustrating a result of comparison between an estimated value and an actually measured value of a BER-OSNR characteristic for each received optical power.
[Fig. 8] Fig. 8 is a flowchart illustrating a method for calculating an amount of change in the BER-OSNR characteristic.
[Fig. 9] Fig. 9 is a diagram illustrating an example of a hardware configuration of an estimation device.

### Description of Embodiments

Hereinafter, an embodiment of the present disclosure will be described with reference to the drawings. In the drawings, the same portions are denoted by the same reference signs, and the description thereof will be omitted.

### [Overview of Present Disclosure]

In the present disclosure, (a) a value of signal quality or transmission quality (a change in the value of the signal quality or the transmission quality) is measured and recorded while changing received optical power at an optical receiver, and from a result, a penalty that relates to signal quality or transmission quality and is dependent on the received optical power (a received-optical-power dependent penalty) is calculated. In addition, (b) an amount of change in the BER-OSNR characteristic according to a change in the received optical power is estimated and calculated by using the calculated received-optical-power dependent penalty. As a result, an influence of a change in the received optical power on the BER-OSNR characteristic can be quantitatively evaluated.

### [Configuration of Estimation System]

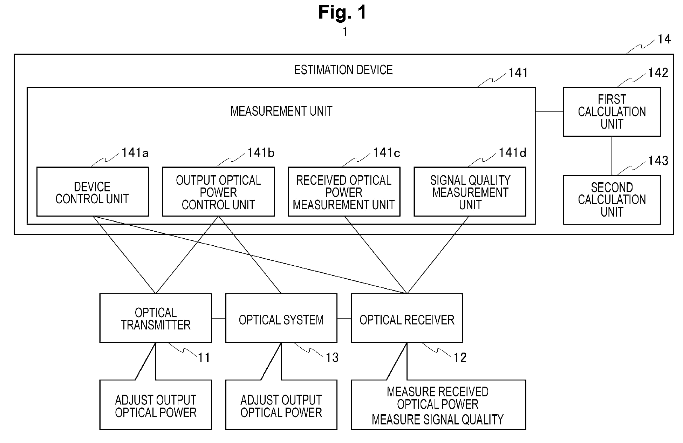

Fig. 1 is a diagram illustrating a configuration example of an estimation system 1 according to the present embodiment. The estimation system 1 includes an optical transmitter 11, an optical receiver 12, an optical system 13, and an estimation device 14.

The optical transmitter 11 is a device that transmits an optical signal to the optical receiver 12. The optical receiver 12 is a device that receives an optical signal from the optical transmitter 11. The optical transmitter 11 and the optical receiver 12 are connected via an optical fiber and a transmission line of the optical system 13.

The optical system 13 is, most simply, an optical fiber having a very short propagation distance. In this case, the optical transmitter 11 and the optical receiver 12 have a back-to-back configuration in which the optical transmitter 11 and the optical receiver 12 are connected by an optical fiber having a very short propagation distance.

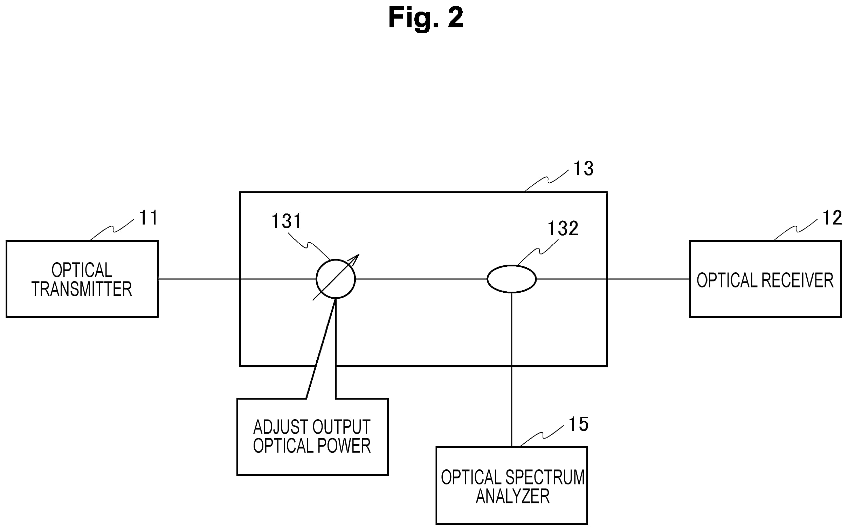

Figs. 2 to 5 are diagrams each illustrating another configuration example of the optical system 13.

An optical system 13 illustrated in Fig. 2 includes a variable attenuator 131 that variably attenuates an optical signal from the optical transmitter 11, and a demultiplexer 132 that demultiplexes the variably attenuated optical signal to the optical receiver 12 and an optical spectrum analyzer 15.

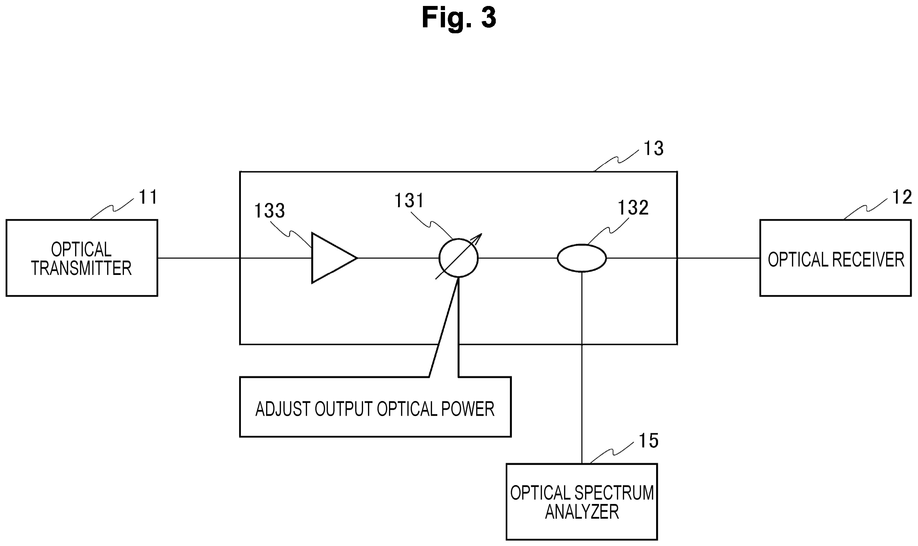

An optical system 13 illustrated in Fig. 3 further includes an optical amplifier 133 that amplifies the optical signal from the optical transmitter 11, between the optical transmitter 11 and the variable attenuator 131 that are illustrated in Fig. 2.

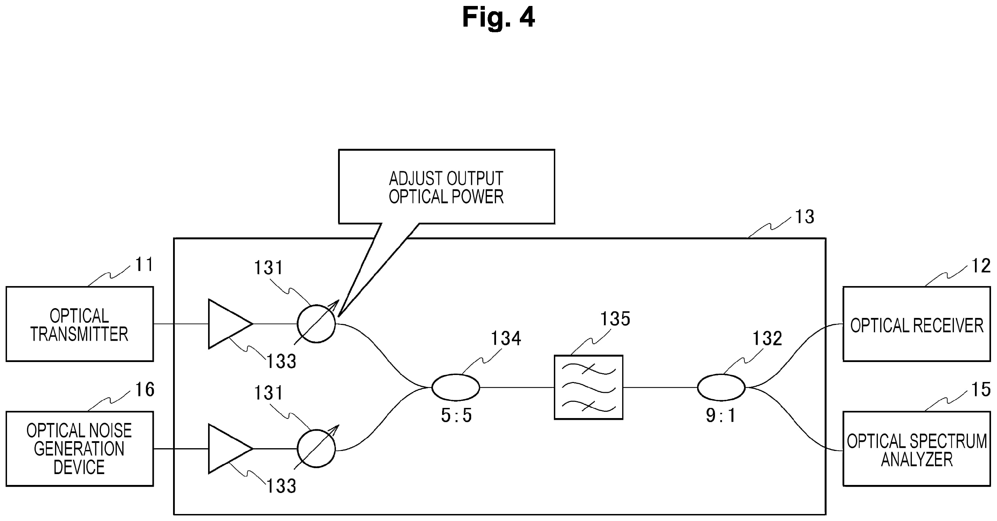

An optical system 13 illustrated in Fig. 4 includes an optical amplifier 133 that amplifies an optical signal from the optical transmitter 11, a variable attenuator 131 that variably attenuates the amplified optical signal, an optical amplifier 133 that amplifies optical noise from an optical noise generation device 16, a variable attenuator 131 that variably attenuates the amplified optical noise, a multiplexer 134 that multiplexes amplified and variably attenuated optical signal light and amplified and variably attenuated optical noise, an optical bandpass filter 135 that only transmits desired light of multiplexed light, and a demultiplexer 132 that demultiplexes the desired light to the optical receiver 12 and an optical spectrum analyzer 15.

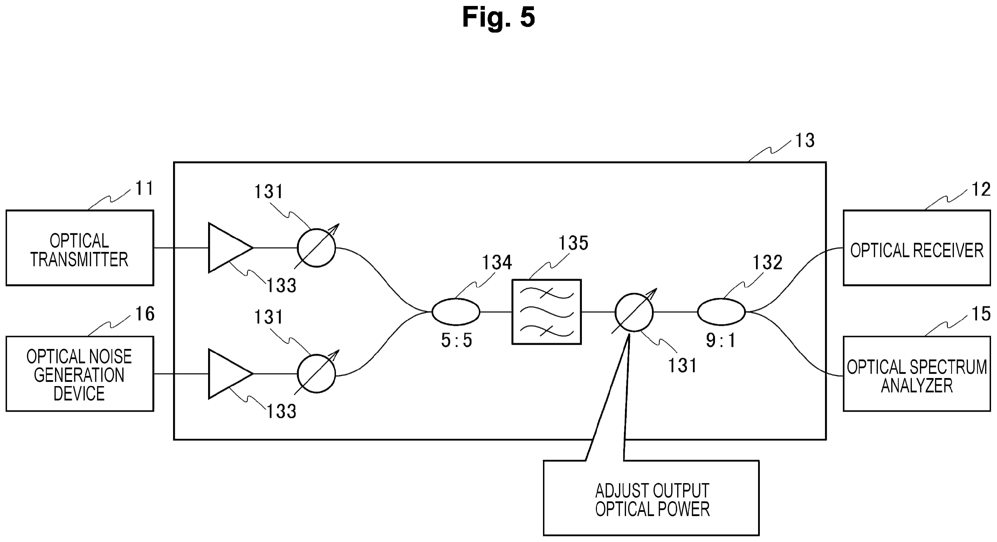

An optical system 13 illustrated in Fig. 5 further includes a variable attenuator 131 that variably attenuates desired light, between the optical bandpass filter 135 and the demultiplexer 132 that are illustrated in Fig. 4.

The optical systems 13 illustrated in Figs. 2 to 5 are examples of the back-to-back configuration. For example, a plurality of attenuators having different fixed values may be used instead of the variable attenuator 131, or the optical spectrum analyzer 15 may be omitted.

The estimation device 14 is a device that is connected to each of the optical transmitter 11 or the optical system 13 and the optical receiver 12, as illustrated in Fig. 1, and estimates an amount of change in a BER-OSNR characteristic of an optical transceiver (11 and 12) (a relationship between signal quality and transmission quality of the optical transceiver (11 and 12)) according to a change in received optical power at the optical receiver 12.

The estimation device 14 includes a measurement unit 141, a first calculation unit 142, and a second calculation unit 143.

The measurement unit 141 has a function of measuring and recording a value of signal quality or transmission quality (a change in the value of the signal quality or the transmission quality) for each received optical power at the optical receiver 12, while changing received optical power at the optical receiver 12 by adjusting output optical power from an optical transmission side.

The output optical power from the optical transmission side is roughly equivalent to the received optical power at the optical receiver 12, and if the output optical power is adjusted in the optical transmitter 11 or the optical system 13, the received optical power in the optical receiver 12 also changes. For example, in a case where the optical transmitter 11 and the optical receiver 12 are only connected by an optical fiber, the measurement unit 141 measures and records the signal quality, while changing the received optical power at the optical receiver 12 by adjusting the output optical power at the optical transmitter 11.

In the case of Fig. 2 or 3, the measurement unit 141 adjusts the output optical power by using the variable attenuator 131. In the case of Fig. 4, the measurement unit 141 adjusts the output optical power by using the variable attenuator 131 that variably attenuates an optical signal. In the case of Fig. 5, the measurement unit 141 adjusts the output optical power by using the variable attenuator 131 that variably attenuates desired light.

In order to achieve the function, the measurement unit 141 includes a device control unit 141a that performs setting of transmission and reception of an optical signal on the optical transceiver (11 and 12), an output optical power control unit 141b that causes the optical transmitter 11 or the optical system 13 to adjust output optical power of an optical signal to be output from the optical transmitter 11 in order to change received optical power at the optical receiver 12, a received optical power measurement unit 141c that measures and records received optical power of an optical signal that has been input to the optical receiver 12, and a signal quality measurement unit 141d that measures signal quality or transmission quality of the optical signal received by the optical receiver 12 and records the signal quality or the transmission quality in association with the received optical power at the time of measurement, as illustrated in Fig. 1.

The first calculation unit 142 has a function of calculating a penalty that relates to signal quality or transmission quality and is dependent on the received optical power (a received-optical-power dependent penalty), by using a measured value of signal quality or transmission quality for each received optical power that has been measured by the measurement unit 141. The penalty is, for example, signal distortion.

For example, the first calculation unit 142 calculates the received-optical-power dependent penalty in such a way that a measured value of signal quality for each received optical power coincides with a calculated value of signal quality that is calculated from the sum of a penalty that relates to signal quality and is dependent on received optical power (the received-optical power dependent penalty), a penalty that relates to signal quality and is independent of received optical power (a first received-optical-power independent penalty), and a penalty that relates to signal quality, is independent of received optical power, and is calculated from an optical noise amount (OSNR) (a second received-optical-power independent penalty).

The second calculation unit 143 has a function of calculating an amount of change in the BER-OSNR characteristic according to a change in received optical power, by using the penalty calculated by the first calculation unit 142 that relates to signal quality or transmission quality and is dependent on received optical power (the received-optical-power dependent penalty).

For example, when the received optical power has changed from r₀ to r₁, the second calculation unit 143 calculates a penalty p₀ at a time when the received optical power is r₀ and a penalty p₁ at a time when the received optical power is r₁ from a result of calculating the received-optical-power dependent penalty, and calculates an amount of change in the BER-OSNR characteristic from a difference between the penalty p₀ and the penalty p₁.

Specifically, for example, the second calculation unit 143 calculates an amount of change in the BER-OSNR characteristic according to a change in received optical power, by reflecting a difference in the received-optical-power dependent penalty (a difference between the penalty p₀ and the penalty p₁) in a formula for calculating the BER-OSNR characteristic.

Hereinafter, description will be provided by using, as an example, a value of signal quality (for example, a Q-factor or Pre-FEC BER) of the "value of signal quality or transmission quality". Instead of the signal quality, a "value of transmission quality", such as the optical noise amount (OSNR), may be used.

### [Method for Calculating Received-Optical-Power Dependent Penalty]

A method for calculating the received-optical-power dependent penalty that is performed by the first calculation unit 142 will be described.

In the present embodiment, an existing BER-OSNR model that does not take the received-optical-power dependent penalty into consideration is extended in such a way that the received-optical-power dependent penalty can be taken into consideration.

The existing BER-OSNR model is expressed as Formula (1).
[Math. 1] $\left.\begin{matrix}BER = Ψ \left(SNR\right) \\ {SNR}^{- 1} = {SNR}_{TRX}^{- 1} + {SNR}_{ASE}^{- 1} + {SNR}_{NLI}^{- 1}\end{matrix}\right\}$ (1)

Formula (1) is described in Toru Mano, and 9 others, "Modeling Transceiver BER-OSNR Characteristic for QoT Estimation in Short-Reach Systems", 2023 International Conference on Optical Network Design and Modeling (ONDM) (ONDM 2023), Coimbra, Portugal.

Ψ is a function determined by a signal modulation scheme. In the case of DP-16QAM, Ψ(SNR) = (3/8) erfc(√(SNR/10)) is established. SNR_{TRX} is the SNR of noise generated in the optical transceiver (11 and 12). SNR_{ASE} is the SNR of ASE noise generated in an optical noise generation device, an optical amplifier, or the like (ASE), and is obtained by converting OSNR into SNR. SNR_{NLI} is the SNR of NLI noise generated by a fiber nonlinear effect due to WDM or the like.

In the back-to-back configuration, there is no wavelength multiplexing, and the propagation distance of an optical fiber is also very short, and therefore an influence of a fiber nonlinear optical effect can be ignored. In the description below, consideration will be given while excluding SNR_{NLI}.

In order to take the received-optical-power dependent penalty into consideration, the existing BER-OSNR model expressed as Formula (1) is extended as expressed as Formula (2) where the received optical power is Pᵢₙ.
[Math. 2] $\left.\begin{matrix}BER = Ψ \left(SNR\right) \\ {SNR}^{- 1} = {SNR}_{TRX}^{- 1} + {SNR}_{ASE}^{- 1} \\ {SNR}_{TRX}^{- 1} = {SNR}_{TRX - in}^{- 1} + {SNR}_{in}^{- 1} {P}_{in}^{- 1}\end{matrix}\right\}$ (2)

SNR_{TRX-in} is SNR obtained by excluding noise relating to the received optical power Pᵢₙ from noise generated in the optical transceiver (11 and 12). The SNR_{TRX-in} corresponds to the penalty that relates to signal quality and is independent of received optical power (the first received-optical-power independent penalty).

SNRᵢₙPᵢₙ is the SNR of noise relating to the received optical power Pᵢₙ. The SNRᵢₙ corresponds to the penalty that relates to signal quality and is dependent on received optical power (the received-optical-power dependent penalty). If the received optical power Pᵢₙ decreases, SNRᵢₙPᵢₙ also decreases, and the signal quality deteriorates.

SNR_{ASE} corresponds to the penalty that relates to signal quality and is independent of received optical power and that is calculated from OSNR (the second received-optical-power independent penalty).

From Formula (2), a relationship between the received optical power Pᵢₙ and the signal quality (BER) can be organized as expressed as Formula (3).
[Math. 3] $\left.\begin{matrix}BER = Ψ \left(SNR\right) \\ {SNR}^{- 1} = \left({SNR}_{TRX - in}^{- 1}+{SNR}_{ASE}^{- 1}\right) + {SNR}_{in}^{- 1} {P}_{in}^{- 1}\end{matrix}\right\}$ (3)

From Expression (3), a value of signal quality (BER) is determined by the received optical power Pᵢₙ and two parameters (SNP_{TRX-in}⁻¹ + SNR_{ASE}⁻¹ and SNRᵢₙ).

Therefore, the first calculation unit 142 calculates the two parameters (SNR_{TRX-in}⁻¹ + SNR_{ASE}⁻¹ and SNRᵢₙ) by using the least-squares method or the like in such a way that a measured value (BER) of signal quality for each received optical power Pᵢₙ that has been measured by the measurement unit 141 coincides with a calculated value (BER) of signal quality that is calculated according to Formula (3).

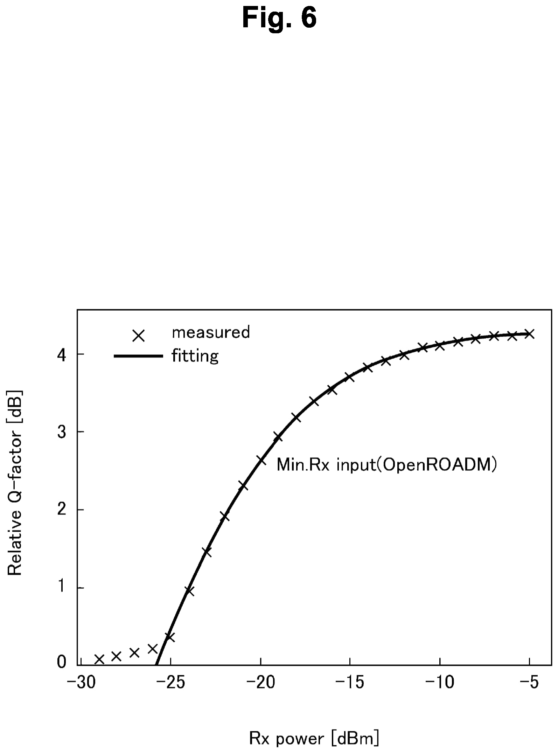

Fig. 6 is a diagram illustrating a result of measuring a value (BER) of signal quality for each received optical power Pᵢₙ that has been measured by the measurement unit 141. A horizontal axis indicates the received optical power Pᵢₙ. A vertical axis indicates a value (a Q-factor) of signal quality. The Q-factor and the BER have a relationship of BER = (1/2) erfc(Q/√(2)), and have one-to-one correspondence. The parameter SNRᵢₙ of the received-optical-power dependent penalty can be calculated by performing parameter fitting by using the least-squares method.

### [Method for Calculating Amount of Change in BER-OSNR Characteristic due to Change in Received Optical Power]

A method for calculating an amount of change in the BER-OSNR characteristic that is performed by the second calculation unit 143 will be described.

In order to estimate an amount of change in the BER-OSNR characteristic, the extended BER-OSNR model of Formula (2) is used. An amount of change in the BER-OSNR characteristic according to a change in received optical power is calculated by adding the parameter (SNRᵢₙ) of the received-optical-power dependent penalty that has been calculated by the first calculation unit 142 to a formula in the second row of Formula (2).

A method for calculating an amount of change in the BER-OSNR characteristic at a time when the received optical power Pᵢₙ has changed from r₀ to r₁ will be described.

It is assumed that BER-OSNR at a time when the received optical power Pᵢₙ is r₀ is known, and BER-OSNR at a time when the received optical power is r₁ is calculated. SNR_{TRX} of the formula in the second row of Formula (2) is calculated from BER-OSNR at a time when the received optical power is r₀, by using a method described in the literature described above "Modeling Transceiver BER-OSNR Characteristic for QoT Estimation in Short-Reach Systems". At this time, BER-OSNR at a time when the received optical power Pᵢₙ has changed from r₀ to r₁ can be expressed as Formula (4).
[Math. 4] $\left.\begin{matrix}BER = Ψ \left(SNR\right) \\ {SNR}^{- 1} = {SNR}_{TRX}^{- 1} + {SNR}_{ASE}^{- 1} - {SNR}_{in}^{- 1} {r}_{0}^{- 1} + {SNR}_{in}^{- 1} {r}_{1}^{- 1}\end{matrix}\right\}$ (4)

As will be described again, in a formula in which a left-hand side is SNR⁻¹, SNRᵢₙ is the penalty that relates to signal quality and is dependent on received optical power (the received-optical-power dependent penalty), and SNR_{ASE} is the penalty that relates to signal quality and is independent of received optical power and that is calculated from OSNR (the second received-optical-power independent penalty). SNR_{ASE} based on OSNR is associated with BER, and therefore the BER-OSNR characteristic can be calculated.

By using Formula (4), an amount of change in the BER-OSNR characteristic at a time when the received optical power Pᵢₙ has changed can be calculated. As a result, an influence of a change in the received optical power Pᵢₙ on the BER-OSNR characteristic can be quantitatively evaluated.

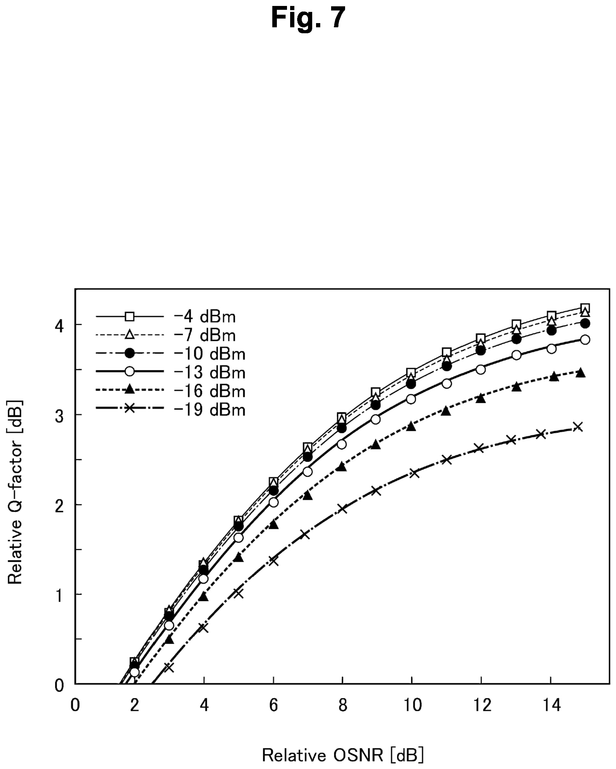

Fig. 7 is a diagram illustrating a result of comparison between a BER-OSNR characteristic for each received optical power Pᵢₙ that has been estimated by the second calculation unit 143 (a solid line or the like) and an actually measured BER-OSNR characteristic for each received optical power Pᵢₙ (symbol × or the like). A vertical axis is expressed by a Q-factor, and the BER-OSNR characteristic for each received optical power Pᵢₙ is estimated. It can be confirmed that an estimated value and an actually measured value agree well with each other.

### [Operation of Estimation Device]

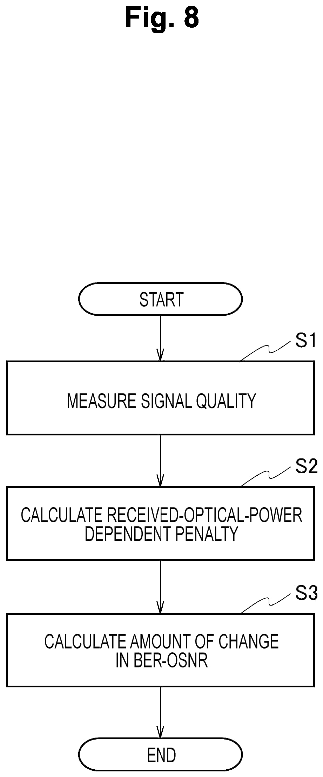

Fig. 8 is a flowchart illustrating a method for estimating an amount of change in the BER-OSNR characteristic that is performed by the estimation device 14.

### Step S1;

The measurement unit 141 measures and records a value (BER) of signal quality for each received optical power Pᵢₙ at the optical receiver 12, while changing received optical power at the optical receiver 12 by adjusting output optical power from an optical transmission side.

### Step S2;

Next, the first calculation unit 142 calculates the parameter (SNRᵢₙ) of the received-optical-power dependent penalty by using the least-squares method or the like in such a way that a measured value (BER) of signal quality for each received optical power Pᵢₙ that has been measured in step S1 coincides with a calculated value (BER) of signal quality that is calculated according to Formula (3).

### Step S3;

Finally, the second calculation unit 143 estimates and calculates an amount of change in the BER-OSNR characteristic at a time when the received optical power Pᵢₙ has changed from r₀ to r₁, by using the extended BER-OSNR model of Formula (4) including the parameter (SNRᵢₙ) of the received-optical-power dependent penalty.

### [Advantageous Effects]

According to the present embodiment, the estimation device 14 includes the measurement unit 141 that measures a value of signal quality or transmission quality for each received optical power at the optical receiver 12, for the optical transmitter 11 and the optical receiver 12 that are connected via a transmission line, the first calculation unit 142 that calculates a penalty that relates to signal quality or transmission quality and is dependent on received optical power, by using a measured value of the signal quality or the transmission quality for each received optical power at the optical receiver 12, and the second calculation unit 143 that calculates an amount of change in the BER-OSNR characteristic of the optical transceiver (11 and 12) according to a change in the received optical power, by using the penalty that relates to the signal quality or the transmission quality and is dependent on the received optical power, and therefore an influence of the change in the received optical power on a relationship between the signal quality and the transmission quality of the optical transceiver can be quantitatively evaluated. In addition, a BER-OSNR characteristic for each received optical power can be calculated, and it is possible to estimate the signal quality and calculate the transmission quality with high accuracy.

### [Others]

The present disclosure is not limited to the embodiment described above. Various modifications can be made to the present disclosure within the gist of the present disclosure.

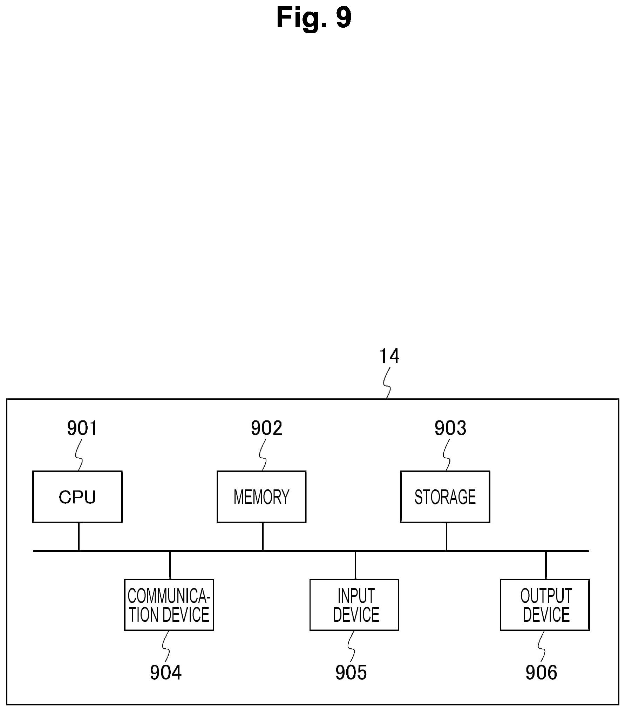

The estimation device 14 of the present embodiment described above can be achieved by using a general-purpose computer system that includes, for example, a CPU 901, a memory 902, a storage 903, a communication device 904, an input device 905, and an output device 906, as illustrated in Fig. 9. The memory 902 and the storage 903 are storage devices. In the computer system, the CPU 901 executes a predetermined program loaded on the memory 902, and therefore each function of the estimation device 14 is achieved.

The estimation device 14 may be implemented by one computer. The estimation device 14 may be implemented by a plurality of computers. The estimation device 14 may be a virtual machine mounted on a computer.

A program for the estimation device 14 can be stored in a computer-readable recording medium such as an HDD, an SSD, a USB memory, a CD, or a DVD. The computer-readable recording medium is, for example, a non-transitory recording medium. The program for the estimation device 14 can also be distributed via a communication network.

### Reference Signs List

- 1: Estimation system
- 11: Optical transmitter
- 12: Optical receiver
- 13: Optical system
- 14: Estimation device
- 15: Optical spectrum analyzer
- 131: Variable attenuator
- 132: Demultiplexer
- 133: Optical amplifier
- 134: Multiplexer
- 135: Optical bandpass filter
- 141: Measurement unit
- 141a: Device control unit
- 141b: Output optical power control unit
- 141c: Received optical power measurement unit
- 141d: Signal quality measurement unit
- 142: First calculation unit
- 143: Second calculation unit
- 901: CPU
- 902: Memory
- 903: Storage
- 904: Communication device
- 905: Input device
- 906: Output device

## Claims

1. An estimation device comprising:
a measurement unit that measures a value of signal quality or transmission quality for each received optical power at an optical receiver, for an optical transmitter and the optical receiver that are connected via a transmission line;
a first calculation unit that calculates a penalty that relates to the signal quality or the transmission quality and is dependent on a received optical power, by using a measured value of the signal quality or the transmission quality for each of the received optical powers at the optical receiver; and
a second calculation unit that calculates an amount of change in a relationship between the signal quality and the transmission quality of the optical transmitter and the optical receiver according to a change in the received optical power, by using the penalty that relates to the signal quality or the transmission quality and is dependent on the received optical power.

2. The estimation device according to claim 1, wherein
the first calculation unit performs
calculating a penalty that relates to the signal quality and is dependent on the received optical power to cause a measured value of the signal quality for each of the received optical powers at the optical receiver to coincide with a calculated value of the signal quality that is calculated from a sum of a penalty that relates to the signal quality and is dependent on the received optical power, a penalty that relates to the signal quality and is independent of the received optical power, and a penalty that relates to the signal quality, is independent of the received optical power, and is calculated from an optical noise amount.

3. The estimation device according to claim 1, wherein
the second calculation unit performs
calculating the amount of change in the relationship between the signal quality and the transmission quality of the optical transmitter and the optical receiver according to the change in the received optical power, by adding the penalty according to the change in the received optical power to a formula for calculating the relationship between the signal quality and the transmission quality of the optical transmitter and the optical receiver.

4. The estimation device according to claim 1, wherein
the measurement unit performs
measuring the value of the signal quality or the transmission quality for each of the received optical powers at the optical receiver, while changing received optical power at the optical receiver by adjusting output optical power of an optical transmission side.

5. An estimation method performed by an estimation device, the estimation method comprising:
measuring a value of signal quality or transmission quality for each received optical power at an optical receiver, for an optical transmitter and the optical receiver that are connected via a transmission line;
calculating a penalty that relates to the signal quality or the transmission quality and is dependent on a received optical power, by using a measured value of the signal quality or the transmission quality for each of the received optical powers at the optical receiver; and
calculating an amount of change in a relationship between the signal quality and the transmission quality of the optical transmitter and the optical receiver according to a change in the received optical power, by using the penalty that relates to the signal quality or the transmission quality and is dependent on the received optical power.
